# EUROPEAN PATENT SPECIFICATION

(11) **EP 2 181 797 B1**
(45) Date of publication and mention of the grant of the patent: **01.08.2012**
(21) Application number: 09174456.5
(22) Date of filing: 29.10.2009
(51) Int. Cl.: B23K 9/04, B23K 10/02, B23K 15/00, B23K 26/34, B02C 2/00, B02C 2/08, B02C 4/30

(54) **Method of manufacture of composite press rollers with welded high abrasion resistant material in cavities ; Composite press roller with such filled cavities**
Verfahren zum Herstellen von Verbundrollen mit geschweissten Hochschleisswiderstandmaterial in Löchern ; Verbundrolle mit solchen gefüllten Hohlräumen
Méthode de fabrication d'un rouleau composite comprenant des cavités remplies par soudage d'un matériau résistant à l'abrasion ; Rouleau composite avec de telles cavités

(30) Priority: 31.10.2008 GB 0819999
(43) Date of publication of application: 05.05.2010
(73) Proprietor: Welding Alloys Limited, Fowlmere Near Royston Hertfordshire SG8 7QS (GB)
(72) Inventor: Tecco, Dorival Goncalves, Cambridge, Cambridgeshire CB4 2SP (GB)
(74) Representative: Turnbull, Alexander James

(56) References cited:
- WO-A1-2007/028990
- JP-A- 7 051 585
- JP-A- 63 192 564
- JP-A- 2001 347 175
- US-A- 5 269 477
- US-A- 5 516 053
- US-A1- 2007 187 537

## Description

The present invention relates, in general, to a pair of adjacent composite press rollers according to the preamble of claim 1 (see, for example, US 5 269 477), which involve the use of welding in order to achieve a layered or three dimensional distributions of properties to improve the overall roll performance and/or lifetime.

For simplicity in this application, any references to "welding" imply "welding, cladding and hardfacing", and any references to "welded" imply "welded, clad and/or hardfaced".

Throughout this specification, the word "manufacture" is used in respect of not only the primary production of welded rollers and other similar metal components but also the refurbishment of such components.

One application for composite rollers is as a press roller used to grind material to fineness acceptable to the trade. For example, press rollers are used as mineral crushers, raw material, clinker and granulated blast furnace slag crushers for cement manufacture.

As will be appreciated, many applications of the use of composite rollers require the composite rollers to be robust to withstand huge pressures and forces. Accordingly, the manufacture of composite rollers provides components which are used in harsh and demanding working environments where resistance to abrasion, adhesion and erosion, oxidation and/or corrosion is important.

One known method of providing such a robust composite roller is to manufacture a composite roller comprising a metallic base or substrate that is welded on one or more of the substrate surface. Such a substrate may be chosen from various materials and known suitable materials including non-alloyed or alloyed steels or other alloys. In this way, a substrate comprising a welded, tough abrasion resistant coating is obtained. The coating can be applied by welding in small increments of thickness limited by the properties of the applied coating material. Problems with the coating method include that as the hardness of the coating increases (which is desired to increase the lifetime and effectiveness of a roller) the more difficult it is to apply the coating and the more sensitive the coating is to cracking. There is therefore a trade-off between using hardened materials and the lifetime and the operational effectiveness of the roller using the coating method.

A further known method of providing a robust composite roller is described in WO 2008/125445 and assigned to Polysius AG. According to WO 2008/125445 a high-pressure bed roller mill is provided with profiled members inserted into bores spaced along the roller body. The profiled members are rod-like in shape and are typically manufactured from a tungsten carbide alloy. One problem with the insertion method is that over time the substrate can deform and a rod may become dislodged. It is subsequently difficult and time consuming to repair the roller mill, which results in expensive operational downtime for the industrial plant hosting the roller mill.

Accordingly, it is an object of the present invention to provide a pair of adjacent composite press rollers that overcomes or at least mitigates the problems of the prior art composite rollers.

According to a first aspect of the present invention, there is provided a pair of adjacent composite press rollers as claimed in claim 1.

Preferred features are disclosed in the dependent claims.

Embodiments and variants of the present invention will now be described, by way of example only, and with reference to the accompanying drawings in which:
Figure 1 is a flowchart describing the manufacture of composite rolls not covered by the present invention;
Figure 2 is a schematic diagram in plan view of a composite roll not covered by the present invention;
Figure 3 is a flowchart describing the manufacture of composite roll not covered by the present invention;
Figure 4 is a schematic diagram in plan view of a composite roll not covered by the present invention;
Figure 5 is a schematic diagram of a cavity comprising fused high abrasion resistant material not covered by the present invention;
Figure 6 is a schematic diagram of a pair of composite rollers in operation according to the present invention;
Figure 7 is a schematic diagram of a portion of a composite roller and number of cavities not covered by the present invention; and
Figure 8 is a schematic diagram of a known welding equipment suitable for use with the present invention.

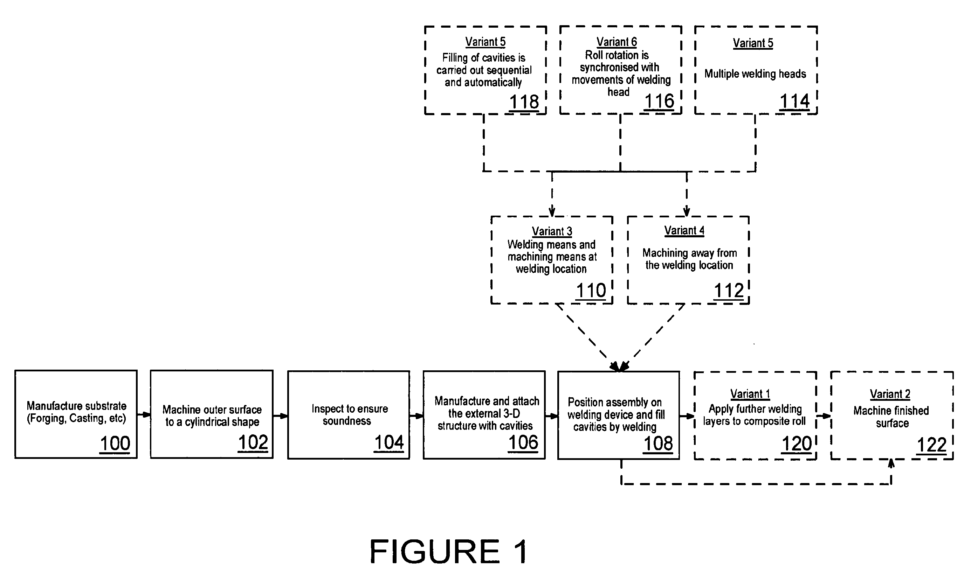

Thus according to Figure 1, a flowchart describing the manufacture of composite rolls comprises a first step 100 of manufacturing a steel substrate using known techniques in the art. Such known techniques include forging and casting.

A second step 102 comprises machining the outer surface of the steel substrate to a cylindrical shape. A third step 104 comprises inspecting the steel substrate to ensure structural integrity and correct dimensions. A fourth step 106 includes attaching an external three dimensional structure to the outer surface of the substrate. In the specific example now described the external three dimensional structure is a steel mesh having cavities. Subsequently a fifth step 108 includes providing the steel substrate having an external mesh applied to a welding device.

Steps 110, 112, 114, 116 and 118 describe a number of variants for operating the welding device whilst filling during a fusing process a high abrasion material into the cavities. According to step 118, the cavities of the external mesh are filled with a high abrasion resistant material sequentially and automatically. According to step 116, the substrate is rolled whilst being synchronised with movements of a welding head and according to step 114, multiple welding heads are employed.

For any of the variants described at steps 114, 116 and 118, a welding head(s) and a machining device can be at the same location 110, that is, as part of the same welding machine, or alternatively, the machining device can be located at a location remote 112 from the welding head(s).

Further variants are included at steps 120 and 122. At step 120 additional welding layers are applied to the substrate after fusing of the high abrasion resistant material. At step 122 the finished surface of the substrate is machined.

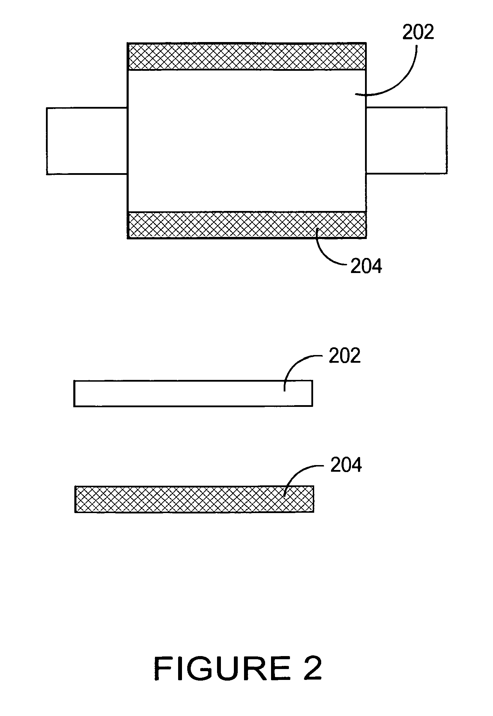

Referring to Figure 2, a schematic diagram in plan view of a manufactured composite roll 200 includes a forged or cast steel substrate 202 surrounded by a three-dimensional construction 204. The three-dimensional construction 204 is filled with a high abrasion resistant material by welding and is therefore fused to the surface of the steel substrate 202 during the welding process. In this manner, the steel substrate 202 and the three dimensional construction provide an integral monolithic component with embedded cavities comprises high abrasion resistant material.

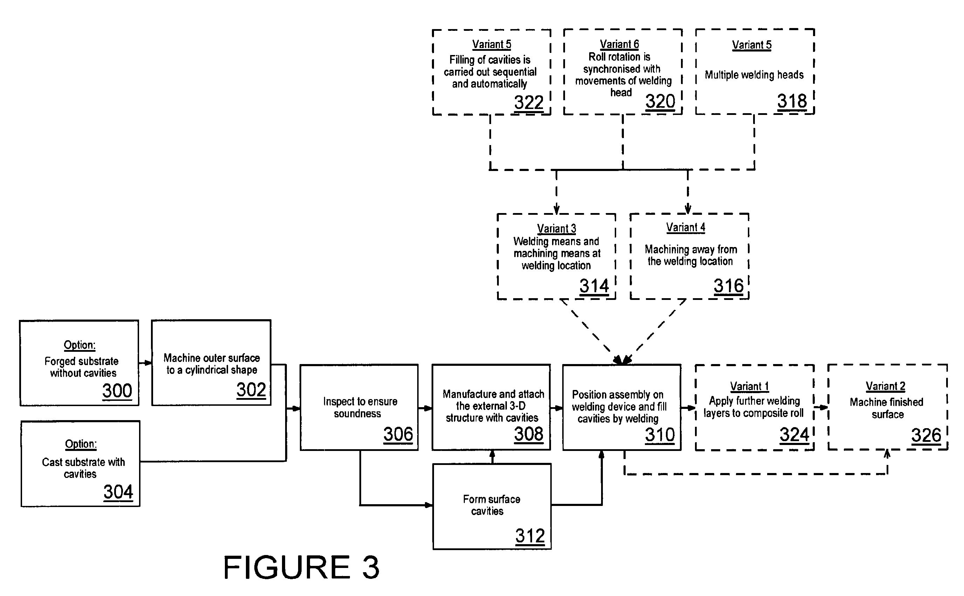

Referring to Figure 3, a flow chart describing the manufacture of composite rolls comprises a first optional step 300 where a substrate is forged without any cavities. Subsequently, in a second step 302 the substrate is machined to a cylindrical shape. An alternative first optional step 304 is to cast the substrate with cavities within the outer surface of the substrate. Subsequent to the second optional step 304, or subsequent to the first optional step 300 and the second step 302 is a third step 306 in which the structural integrity and correct dimensions of the substrate are confirmed.

At a fourth step 308 an external three-dimensional structure is attached to the outer surface of the substrate. In the specific example now described the external three-dimensional structure is a steel mesh having cavities. Subsequently a fifth step 310 includes providing the steel substrate having an external mesh applied to a welding device.

An alternative fourth step 312 comprises forming cavities within the surface of the substrate using cutting tools such as a laser cutting machine or a water jet machine. Other suitable cutting tools will be known to a person skilled in the art. Following the alternative fourth step 312, an external structure with cavities can be attached (as in fourth step 308) or the following step is the fifth step 310.

Steps 314, 316, 318, 320 and 322 describe a number of variants for operating the welding device whilst filling during a fusing process a high abrasion material into the cavities. According to step 322, the cavities of the external mesh are filled with a high abrasion resistant material sequentially and automatically. According to step 320, the substrate is rolled whilst being synchronised with movements of a welding head and according to step 318, multiple welding heads are employed.

For any of the variants described at steps 318, 320 and 322, a welding head(s) and a machining device can be at the same location 314, that is, as part of the same welding machine, or alternatively, the machining device can be located at a location remote 316 from the welding head(s).

Further variants are included at steps 324 and 326. At step 324 additional welding layers are applied to the substrate after fusing of the high abrasion resistant material. At step 326 the finished surface of the substrate is machined.

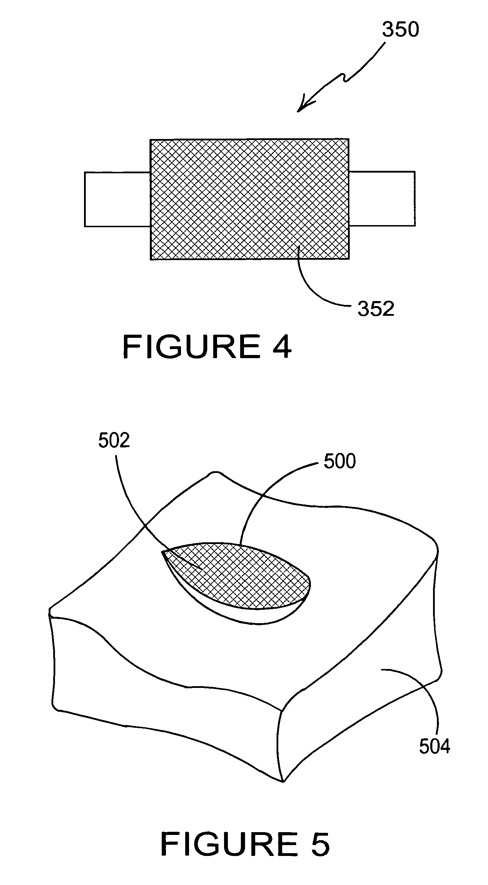

Referring to Figure 4, a schematic diagram in plan view of a manufactured composite roll includes a forged or cast steel substrate 350 comprising cavities filled with a high abrasion resistant material 352. The high abrasion resistant material is fused into the cavities and therefore is securely bonded within the substrate.

As best seen in Figure 5, a close-up of a schematic diagram of a cavity 500 comprising fused high abrasion resistant material 502 according to the present invention is illustrated. The high abrasion resistant material 502 is surrounded by a tough substrate 504, which in this embodiment forms a portion of a steel composite roll.

Choices for such high abrasion resistant materials include those selected from known hardfacing alloys. Known hardfacing alloys include those comprising carbides, nitrides and borides. The person skilled in the art is aware that a good choice for such a material is one that can be fused into the cavity using a welding process and is highly resistant to pressure and forces.

Specific examples of suitable materials are available from Welding Alloys Ltd, UK and comprise chromiun carbite available under the product reference MC-O; HC-O and a complex carbite available under the product reference CN-O; CNV-O.

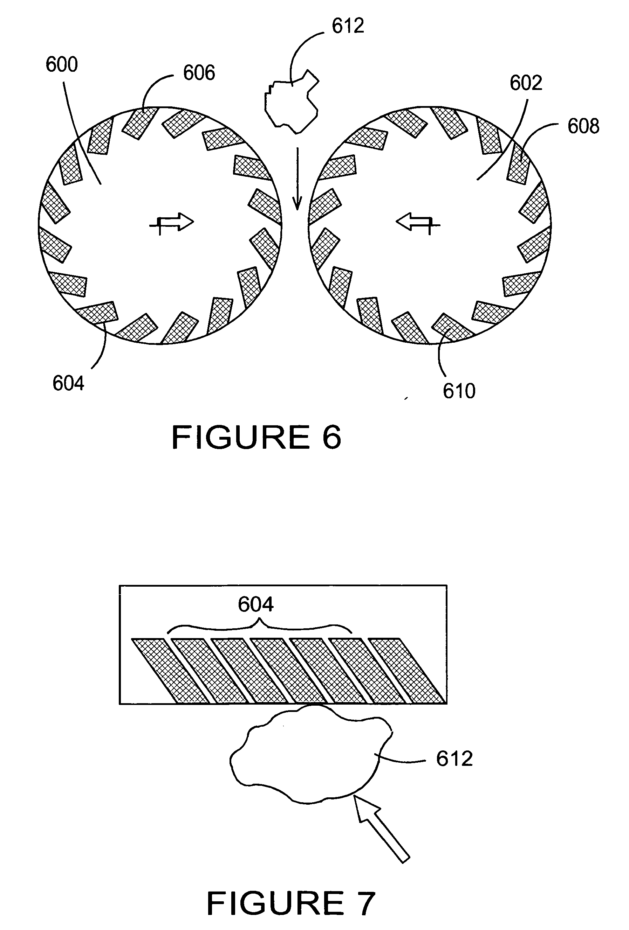

Figure 6 is a schematic diagram of a pair of composite rollers 600, 602 in operation according to the present invention. The first composite roller 600 comprises an arrangement of cavities 604 each comprising a fused high abrasion resistant material 606. Likewise, the second composite roller 602 comprises an arrangement of cavities 608 each comprising a fused high abrasion resistant material 610.

In operation, a particulate 612 for crushing is passed between the rotating pair of composite rollers 600, 602, which exert a pressure against the particulate 612 laterally in the direction shown by the arrows in order to crush the particulate to a powder.

Referring to Figure 7, the particulate 612 is shown impacting the arrangement of cavities 604 at an angle parallel to the direction of force applied by the pair of composite rollers 600, 602.

As illustrated in Figures 5, 6 and 7, the abrasion resistant material is arranged with a given orientation so as to best withstand the compressive stresses generated by the particulate 612 at a point of contact. The compressive stresses are also dissipated by the surrounding tough substrate 504.

Further advantages of the arrangement using cavities in a cavity only embodiment, an external three-dimensional structure embodiment or both together are as follows:
(1) The hard materials intended for abrasion resistance tend to be brittle and are very sensitive to stress concentrators such as at the edges of a cavity. At these edges the materials can fracture and break away in known prior art devices. According to the invention, the materials are fused and contained within the cavities and so the edges are not exposed leading to a less breakage at that point.
(2) The cavity arrangement makes it possible to combine different properties of materials thereby resulting in a stronger and longer lasting assembly.

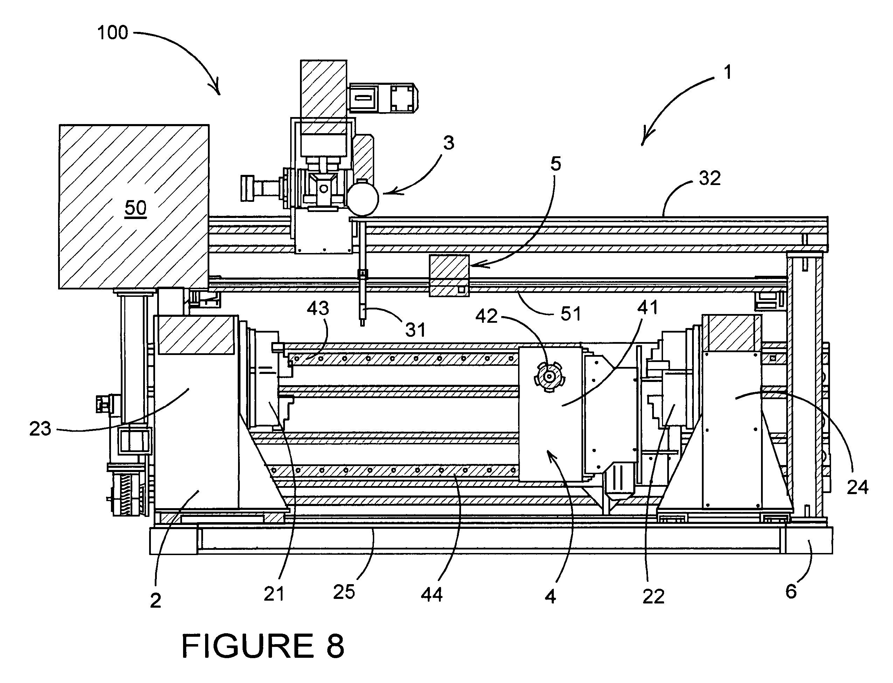

Referring to Figure 8 a schematic diagram of a known welding equipment suitable for use with the present invention includes a welding device 1 as described in WO 2007/028990.

Referring to Figure 8, an apparatus 1 for manufacturing a hardfaced roller (not shown) for use in a steel rolling plant, comprises four main components ata cladding location, namely: a device similar to a lathe and indicated generally at 2 for rotatably supporting a metal cylinder (not shown), as a substrate, to be clad with a metal by arc welding; an arc welding device indicated generally at 3 for cladding the surface of the metal cylinder with metal; a device indicated generally at 4 for machining the metal-clad surface of the cylinder; and a laser device indicated generally at 5 for monitoring the metal-clad surface and/or the unclad surface of the cylinder.

The apparatus 1 comprises a bed 6 upon which the devices 2 to 5 are mounted at the cladding location. The lathe-type device 2 comprises a headstock 21 mounted rotatably in conventional manner to a drive unit 23 which is fixed with respect to the bed 6. A tailstock 22 is mounted rotatably to another unit 24 which is mounted upon bed rails 25 for linear movement towards and away from the drive unit 23 and associated headstock 21, again in known manner. The axially opposed ends of a metal cylinder (not shown) to be metal clad can be mounted to respective ones of the headstock 21 and tailstock 22 for rotation with respect to the arc welding device 3 about an axis generally perpendicular to the longitudinal axis of the arc welding gun of the device 3. The device 3 is mounted upon a pair of upper rails 32 for linear movement for direction parallel to the axis of the metal cylinder to be clad, so that a welding gun 31, and its associated components, such as wire feed and power supply, can be moved axially back and forth with respect to the cylinder to traverse the surface thereof.

The metal surface machining device 4 comprises a conventional drive unit 41 and a milling head 42, the unit 41 being mounted upon a pair of vertical-spaced rails 43,44 which also extend parallel to the axis of a metal cylinder to be clad with metal as well as to the bedrails and the upper rails 32. A control unit 50 is provided for controlling operation of the components of the apparatus 1.

In use of the apparatus 1, a metal cylinder to be clad with metal is mounted to the lathe-type support device 2, as discussed above. The metal cylinder is of any suitable metallic material, usually a steel.

Upon rotation of the cylinder by the support device 2, the welding device 3 reciprocates back and forth along the axial length of the metal cylinder, with the tip of the arc welding gun 31 at the required distance from the surface of the cylinder.

Such movement of the arc welding device 3 along its associated upper rails 32 is, in this particular embodiment, tracked by movement of the drive unit 41, and hence the milling head 42, of the machining device 4 along its associated rails 43,44 extending parallel to the upper rails 32 of the welding device 3. The distance of the milling head 42 is set, such that it machines the metal clad surface of the cylinder to a required thickness, depending upon the eventual application of the resulting hardfaced roller.

Also, because the milling head 42 tracks closely the arc welding gun 31, machining of the so-clad surface of the cylinder is facilitated, because the cladding metal is still hot. As a consequence, a comparatively smooth clad surface for the eventual hardfaced roller is provided.

The laser monitoring device 5, which is mounted for linear movement along a rail 51 extending parallel to the rails 25,43 and 44, and 32, can be used to monitor the surface of the cylinder, whether it be unclad, partially-clad or fully clad, for controlling operation of the support device 2, for example, the rotational speed thereof and hence that of the metal cylinder to be or being clad, the arc welding device 3 and/or the machining device 4 , to provide the required thickness and smoothness of the surface of the cylinder clad by the arc welding device 3.

No doubt many other effective alternatives will occur to the skilled person. It will be understood that the invention is not limited to the described embodiments and encompasses modifications apparent to those skilled in the art lying within the scope of the claims appended hereto.

## Claims

1. A pair of adjacent composite press rollers (600, 602) for pressing a particutate (612), the rollers comprising a substrate having cavities (604, 608) formed on an outer surface of the substrate within the body of the substrate **characterised by** the cavities (606, 608) containing a fused and welded high abrasion resistant material (606, 610) so that the high abrasion resistant material (606, 610) is fused and contained within the cavities (604, 608) and is arranged for facing and pressing the particulate (612), wherein opposing cavities (604, 608) of the pair of adjacent composite press rollers (600, 602) are so arranged in use that they are substantially perpendicular to one another at a region of contact with the particulate (612) in a plan perpendicular to the axes of votation of the composite press rollers (600, 602).

2. A pair of adjacent composite press rollers (600, 602) as claimed in claim 1, wherein the high abrasion resistant material (606, 610) is selected from hardfaced alloys, optionally alloys comprising carbides, nitrides and borides

3. A pair of adjacent composite press rollers (600, 602) as claimed in any preceding claim, wherein the high abrasion resistant material (606, 610) projects from the cavity opening (604, 608).

4. A pair of adjacent composite press rollers (600, 602) as claimed in any one of claims 1 to 3, wherein the high abrasion resistant material (606, 610) is flush with the cavity opening (604, 608).

5. A pair of adjacent composite press rollers (600, 602) as claimed in any preceding claim wherein the region of contact with the particulate (612) is at a region of maximum compressional force acting upon the particulate (612).

6. A pair of adjacent composite press rollers (600, 602) as claimed in any preceding claim, wherein the region of contact is substantially at the nip angle of the composite rollers (600, 602).

7. A pair of adjacent composite press rollers (600, 602) as claimed in any one of the preceding claims, wherein the substrate is comprised of steel.

8. A pair of adjacent composite press rollers (600, 602) as claimed in any one of the preceding claims, wherein the substrate is comprised of nanosteel.

9. A pair of adjacent composite press rollers (600, 602) as claimed in any one of the preceding claims, wherein the cavities (604, 608) have varying surface areas.

10. A pair of adjacent composite press rollers (600, 602) as claimed in any one of the preceding claims, wherein the density distribution of the cavities (606, 608) increases at the region of contact with a particulate (612).

## Patentansprüche

1. Ein Paar von benachbarten Verbundpressrollen (600, 602) zum Pressen eines Partikels (612), wobei die Rollen ein Substrat mit Hohlräumen (604, 608) aufweisen, die auf einer äußeren Oberfläche des Substrats innerhalb des Körpers des Substrats ausgebildet sind, **dadurch gekennzeichnet, dass** die Hohlräume (604, 608) ein geschmolzenes und verschweißtes hochabriebfestes Material (606, 610) enthalten, so dass das hochabriebfeste Material (606, 610) in den Hohlräumen geschmolzen und aufgenommen ist und so angeordnet ist, dass es dem Partikel gegenüberliegt und dieses verpresst, wobei gegenüberliegende Hohlräume (604, 608) des Paars von benachbarten Verbundpressrollen (600, 602) bei der Verwendung so angeordnet sind, dass sie im Kontaktbereich mit dem Partikel (612) in einer Ebene rechtwinklig zur Drehachse der Verbundpressrollen (600, 602) im Wesentlichen rechtwinklig zueinander liegen.

2. Ein Paar von benachbarten Verbundpressrollen nach Anspruch 1, wobei das hochabriebfeste Material (606, 610) aus gehärteten Legierungen, optional aus Legierungen mit Carbiden, Nitriden und Boriden gebildet ist.

3. Ein Paar von benachbarten Verbundpressrollen (600, 602) nach einem der vorhergehenden Ansprüche, wobei das hochabriebfeste Material (606, 610) aus den Hohlraumöffnungen (604, 608) vorsteht.

4. Ein Paar von benachbarten Verbundpressrollen (600, 602) nach einem der Ansprüche 1 bis 3, wobei das hochabriebfeste Material (606, 610) mit den Hohlraumöffnungen (604, 608) ausgerichtet ist.

5. Ein Paar von benachbarten Verbundpressrollen (600, 602) nach einem der vorhergehenden Ansprüche, wobei der Kontaktbereich mit dem Partikel im Bereich der maximalen Druckkraft liegt, die auf das Partikel (612) einwirkt.

6. Ein Paar von benachbarten Verbundpressrollen (600, 602) nach einem der vorhergehenden Ansprüche, wobei der Kontaktbereich im Wesentlichen am Bisswinkel der Verbundpressrollen (600, 602) liegt.

7. Ein Paar von benachbarten Verbundpressrollen (600, 602) nach einem der vorhergehenden Ansprüche, wobei das Substrat aus Stahl besteht.

8. Ein Paar von benachbarten Verbundpressrollen (600, 602) nach einem der vorhergehenden Ansprüche, wobei das Substrat aus Nanostahl gebildet ist.

9. Ein Paar von benachbarten Verbundpressrollen (600, 602) nach einem der vorhergehenden Ansprüche, wobei die Hohlräume (604, 608) variable Oberflächen aufweisen.

10. Ein Paar von benachbarten Verbundpressrollen (600, 602) nach einem der vorhergehenden Ansprüche, wobei die Dichteverteilung der Hohlräume (604, 608) im Bereich des Kontaktes mit einem Partikel (612) vergrößert ist.

## Revendications

1. Paire de rouleaux de pression composites (600, 602) adjacents destinée à comprimer une particule (612), les rouleaux (600, 602) comprenant un substrat ayant des cavités (604, 608) formées sur une surface extérieure du substrat à l'intérieur du corps du substrat, **caractérisée par le fait que** les cavités (604, 608) contiennent un matériau hautement résistant à l'abrasion (606, 610) fusionné et soudé de sorte que le matériau hautement résistant à l'abrasion (606, 610) est fusionné et contenu à l'intérieur des cavités (604, 608) et est agencé pour faire face à la particule (612) et lui imposer une pression, dans laquelle les cavités opposées (604, 608) de la paire de rouleaux de pression composites adjacents sont agencées à l'usage de telle sorte qu'elles sont sensiblement perpendiculaires l'une par rapport à l'autre au niveau d'une région de contact avec la particule (612) dans un plan perpendiculaire aux axes de rotation des rouleaux de pression composites (600, 602).

2. Paire de rouleaux de pression composites (600, 602) adjacents selon la revendication 1, dans laquelle le matériau hautement résistant à l'abrasion (606, 610) est choisi parmi les alliages de rechargement, facultativement les alliages comprenant les carbures, les nitrures et les borures.

3. Paire de rouleaux de pression composites (600, 602) adjacents selon l'une quelconque des revendications précédentes, dans laquelle le matériau hautement résistant à l'abrasion (606, 610) fait saillie de l'ouverture de cavité (604, 608).

4. Paire de rouleaux de pression composites (600, 602) adjacents selon l'une quelconque des revendications 1 à 3, dans laquelle le matériau hautement résistant à l'abrasion (606, 610) est au même niveau que l'ouverture de cavité (604, 608).

5. Paire de rouleaux de pression composites (600, 602) adjacents selon l'une quelconque des revendications précédentes, dans laquelle la région de contact avec la particule (612) est au niveau d'une région de force de compression maximum agissant sur la particule (612).

6. Paire de rouleaux de pression composites (600, 602) adjacents selon l'une quelconque des revendications précédentes, dans laquelle la région de contact est sensiblement au niveau de l'angle de prise des rouleaux composites (600, 602).

7. Paire de rouleaux de pression composites (600, 602) adjacents selon l'une quelconque des revendications précédentes, dans laquelle le substrat est composé d'acier.

8. Paire de rouleaux de pression composites (600, 602) adjacents selon l'une quelconque des revendications précédentes, dans laquelle le substrat est composé de nano-acier.

9. Paire de rouleaux de pression composites (600, 602) adjacents selon l'une quelconque des revendications précédentes, dans laquelle les cavités (604, 608) ont des surfaces variables.

10. Paire de rouleaux de pression composites (600, 602) adjacents selon l'une quelconque des revendications précédentes, dans laquelle la répartition de densité des cavités (604, 608) augmente au niveau de la région de contact avec une particule (612).
